# FASCICULE DE BREVET EUROPEEN

(11) **EP 2 188 199 B1**
(45) Date de publication et mention de la délivrance du brevet: **12.12.2012**
(21) Numéro de dépôt: 08806145.2
(22) Date de dépôt: 01.07.2008
(51) Int. Cl.: B65G 47/68

(54) **PROCEDE ET INSTALLATION D'ALIGNEMENT DE PRODUITS CONVOYES SUR UNE TABLE**
VERFAHREN UND EINRICHTUNG ZUR AUSRICHTUNG VON BEFÖRDERTEN PRODUKTEN AUF EINEM TISCH
METHOD AND EQUIPMENT FOR ALIGNING CONVEYED PRODUCTS ON A TABLE

(30) Priorité: 20.07.2007 FR 0705245
(43) Date de publication de la demande: 26.05.2010
(73) Titulaire: Sidel Participations, 76930 Octeville Sur Mer (FR)
(72) Inventeur: PETROVIC, Zmaj, F-76930 Octeville S/mer (FR); KRAUTH, Denis, F-76930 Octeville S/mer (FR)
(74) Mandataire: Cabinet Plasseraud
(86) Numéro de dépôt international: PCT/FR2008/051221
(87) Numéro de publication internationale: WO 2009/019357

(56) Documents cités:
- EP-A- 1 380 522
- DE-A1- 3 129 389
- DE-A1- 4 332 341

## Description

La presente invention concerne un procédé de mise en ligne, à la queue leu leu, d'un flux de bouteilles, en sortie d'une table de dosage, après un accumulateur, par exemple, ou autre. Elle concerne également l'installation aménagée pour mettre en oeuvre ce procédé.

Le document FR 2330618 décrit un procédé selon la préambule de la revendication 1 et une installation selon le préambule de la revendication 4, qui permet de transformer un flux de bouteilles en une file unique où lesdites bouteilles sont convoyées à la queue leu leu vers une unité de remplissage ou autre.

Cette installation comprend une table de dosage qui prépare un flux de bouteilles provenant d'une table d'accumulation, par exemple. Cette table est constituée de bandes sans fin juxtaposées pour convoyer le flux de bouteilles en les faisant avancer à une vitesse, appelée vitesse nominale Vn, qui permet d'atteindre un débit correspondant plus ou moins au débit de l'unité de production qui déverse les bouteilles sur la table d'accumulation.

Les bouteilles passent de la table de dosage à une table d'alignement qui est également constituée de plusieurs bandes sans fin juxtaposées et d'un guide, lequel guide est disposé en biais au-dessus de ladite table d'alignement, obligeant les bouteilles à passer d'une bande à l'autre au fur et à mesure qu'elles progressent vers l'aval de la table et en particulier vers le convoyeur d'évacuation.

Les différentes bandes sans fin de la table d'alignement sont animées d'une vitesse graduellement croissante à partir de l'entrée de ladite table. Ces vitesses augmentent progressivement pour étirer le flux de bouteilles et permettre la mise en ligne de ces dernières, sur une seule file, au fur et à mesure de leur progression sur cette table d'alignement.

Avec l'accroissement de la vitesse sur la table multi bandes, l'espace entre les bouteilles augmente et la force résultante générée par le guide fait que les bouteilles s'insèrent les unes entre les autres.

On retrouve une disposition semblable dans le document EP 1497208 avec un aménagement particulier au niveau de la table de dosage, ou de transition, qui s'étend entre la table d'accumulation et la table d'alignement.

Les cadences, qui sont de plus en plus rapides, ne permettent plus de garantir un alignement des bouteilles sur des distances raisonnables.

Malgré les aménagements apportés à ces installations, l'alignement des bouteilles reste un problème et l'on y rencontre toujours des incidents avec des bouteilles qui ne parviennent pas à s'intégrer dans la file même en augmentant le temps passé sur la table d'alignement et en allongeant cette dernière.

Dans le document FR précité, ce problème est résolu par l'adjonction, en marge du convoyeur d'évacuation, d'un convoyeur de réintégration qui ramène les bouteilles non insérées dans la partie amont de la table d'alignement.

Cette solution augmente la manipulation des bouteilles avec les risques d'altérations et de dégradations des bouteilles, causés par le frottement sur les guides.

L'invention permet de traiter ce problème d'alignement de façon efficace et plus rationnelle, sans compliquer l'installation.

Elle permet en plus de simplifier les réglages lorsqu'il faut adapter la vitesse des bouteilles sur les tables en fonction des cadences et en fonction du type de bouteilles, certaines bouteilles étant plus stables que d'autres.

Ces caractéristiques et paramètres des produits à aligner peuvent être pris plus facilement en compte par l'opérateur pour optimiser le processus d'alignement et atteindre un rendement maximum sans risques pour les bouteilles et en particulier sans risques de chutes.

L'installation pour la mise en oeuvre du procédé conserve une certaine compacité ; elle peut même être d'une dimension plus intéressante que les installations décrites dans les documents précités.

Selon l'invention, le procédé consiste à mettre en ligne, à la queue leu leu, des bouteilles qui arrivent en flux, par le biais d'une table de dosage, sur une table d'alignement du type multi bandes, ledit procédé consistant :
- à guider lesdites bouteilles en biais sur ladite table d'alignement entre son entrée et sa sortie et, simultanément,
- à accélérer graduellement la vitesse desdites bouteilles sur une partie de ladite table d'alignement, à partir de ladite entrée et, en plus,
- à soumettre lesdites bouteilles à au moins deux opérations alternées de resserrement et d'écartement, sur la partie aval de ladite table d'alignement, avant leur évacuation, sous la forme d'une file constituée, par un convoyeur de transfert, lesquelles opérations augmentent les chances d'intégration des bouteilles en offrant aux bouteilles qui se trouvent en deuxième file la possibilité de se positionner dans un intervalle, même si cet intervalle est insuffisant pour intégrer immédiatement la file, et de se maintenir dans cet intervalle par effet de coin pour surmonter l'opération de resserrement suivante avant de s'intégrer sans peine dans ladite file dès l'opération suivante d'écartement.

Selon une disposition de l'invention, le procédé consiste à effectuer l'opération de resserrement à une vitesse qui se situe dans une plage allant de Vn à 1,1 Vn.

Selon une autre disposition de l'invention, le procédé consiste à effectuer l'opération d'écartement à une vitesse qui se situe dans une plage allant de 1,2Vn à 1,3Vn.

L'invention concerne également l'installation aménagée pour mettre en oeuvre le procédé détaillé auparavant.

Cette installation selon l'invention comprend notamment : - une table de dosage qui amène un flux de bouteilles à une vitesse appropriée, - un convoyeur de transfert qui évacue la file de bouteilles, lorsqu'elle est constituée, à une vitesse qui est supérieure à la vitesse nominale Vn et, entre les deux, - une table d'alignement multi bandes qui est surmontée d'un guide disposé en biais entre ses deux extrémités, laquelle table d'alignement comprend deux groupes de bandes :
- un premier groupe de bandes qui accueille et aligne, autant que faire se peut, les bouteilles provenant de ladite table de dosage, lequel premier groupe de bandes est animé de vitesses allant crescendo en partant d'une vitesse sensiblement supérieure à la vitesse de livraison des bouteilles, par ladite table de dosage, pour atteindre graduellement une vitesse supérieure à la vitesse nominale Vn et,
- un second groupe de bandes, avant ledit convoyeur de transfert, constitué d'au moins deux couples de bandes qui sont animées, à l'intérieur de chaque couple, de vitesses différentes pour effectuer, en alternance et d'un couple à l'autre, les opérations de resserrement et d'écartement des bouteilles qui circulent sur lesdites bandes.

Selon une disposition de l'invention, dans chaque couple de bandes, la bande amont qui est impliquée dans l'opération de resserrement des bouteilles fonctionne à une vitesse qui se situe dans une plage allant de Vn à 1,1 Vn et la bande aval qui est impliquée dans l'opération d'écartement des bouteilles fonctionne à une vitesse qui se situe dans une plage allant de 1,2 Vn à 1,3 Vn.

De façon classique, les bandes des différents couples sont entraînées à l'une de leurs extrémités par un même arbre moteur qui comporte des roues d'engrènement de diamètres différents.

Mais l'invention sera encore détaillée à l'aide de la description suivante et des dessins annexés, donnés à titre indicatif, et dans lesquels :
- la figure 1 est une vue en plan schématique d'une installation selon l'invention,
- la figure 2 représente la partie amont des couples de bandes qui sont disposés avant le convoyeur de transfert, dans la partie aval de la table d'alignement, avec une indication de la vitesse des différentes bandes,
- les figures 3 à 8 illustrent, schématiquement, le processus de mise en ligne des bouteilles non encore intégrées, au niveau de la partie aval de la table d'alignement.

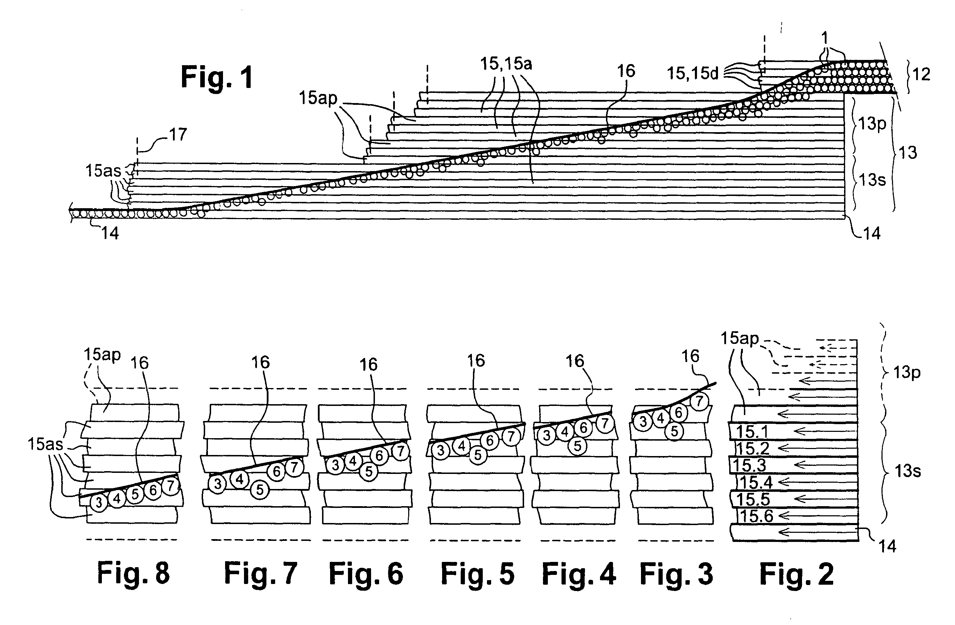

L'installation représentée figure 1 s'insère, par exemple, dans une installation globale de préparation de bouteilles (1), entre une remplisseuse et une étiqueteuse, non représentées.

Cette installation est du type de celles qui sont décrites dans les documents précités et en particulier le document EP 1497208.

Elle comprend une table (12) de dosage qui alimente la table (13) d'alignement, laquelle table (13) d'alignement dispose les bouteilles (1) en file indienne, sans pression entre eux, pour qu'ils puissent être transférés, par un convoyeur (14) approprié vers leur destination suivante: une unité d'étiquetage, par exemple.

Ces différentes tables sont constituées de bandes (15) sans fin motorisées, de type modulaires, qui forment une surface plane continue sur laquelle les bouteilles peuvent glisser.

Les vitesses de ces bandes (15) sans fin sont différentes d'un endroit à l'autre. Comme indiqué dans le document FR 2330618 précité, la vitesse des bandes est très faible au niveau de la table d'accumulation, c'est-à-dire en amont de la table (12) de dosage.

La vitesse est plus importante pour le groupe de bandes de la table (12) de dosage qui est repéré (15d) sur la figure 1. Cette vitesse est fonction de la cadence des unités de production amont et aval dans une certaine mesure et elle est établie en fonction d'une vitesse dite vitesse nominale Vn, laquelle vitesse nominale correspond à C (cadence) multiplié par D (diamètre des bouteilles).

Le convoyeur (14) de transfert est animé d'une vitesse qui est généralement de l'ordre de 1,2Vn.

Entre la table (12) de dosage et le convoyeur (14) de transfert, la vitesse augmente et c'est ce qui permet de former des écarts entre les bouteilles (1) et de les mettre sur une ligne, à la queue leu leu.

Pour former cet alignement, un guide (16) est disposé au-dessus de la table (13) d'alignement, en biais entre les deux extrémités de ladite table.

L'inclinaison de ce guide (16) a une influence sur la longueur de l'installation. Elle a aussi une influence sur l'efficacité de l'alignement des bouteilles en combinaison avec d'autres paramètres comme la largeur des bandes, leur vitesse et des paramètres liés directement aux bouteilles, comme leur diamètre, leur stabilité.

La table (13) d'alignement est constituée de deux parties : une table (13p) primaire qui se situe à la suite de la table (12) de dosage pour accueillir le flux de bouteilles (1) amenées par ladite table (12) et une table (13s) secondaire qui s'interpose entre cette table (13p) primaire et le convoyeur (14) de transfert.

Sur la table (13p) d'alignement, la vitesse des bandes (15a) augmente graduellement pour atteindre une vitesse qui est de l'ordre de 1,2 fois la vitesse nominale Vn.

Les bouteilles s'alignent sur le guide (16) grâce à l'augmentation progressive de la vitesse des différentes bandes (15ap) qui constitue la table (13p) primaire. L'augmentation graduelle de la vitesse des bandes (15ap), à partir de la sortie de la table (12) de dosage, génère des espaces entre les bouteilles (1) qui sont entraînées par ces bandes (15ap).

Le guide (16) canalise les bouteilles (1) et, surtout, il génère une force résultante suffisante pour aider celles qui ont des difficultés à trouver une place dans la file, en forçant les bouteilles collatérales à s'écarter.

Malgré ces aménagements, il arrive que des produits stagnent en double file et ne parviennent pas à prendre place dans la ligne, ce qui en plus, peut provoquer des incidents au niveau du convoyeur (14) de transfert.

La table (13s) secondaire d'alignement comporte des bandes (15as) qui permettent de parfaire le processus d'alignement des bouteilles (1).

Cette table (13s) est constituée de plusieurs couples de bandes (15as), au moins deux couples, et de préférence trois couples pour atteindre une efficacité totale.

Les bandes (15as) de ces trois couples sont repérées, figure 2, (15.1) à (15.6).

La première bande (15.1), qui se situe après la dernière bande (15ap) de la table (13p) primaire, est animée d'une vitesse qui est inférieure à celle de ladite bande (15ap).

La seconde bande (15.2) évolue à une vitesse plus importante que celle de la première bande (15.1) et ainsi de suite avec une alternance de vitesse réduite et de vitesse plus importante.

En fait, les vitesses sont choisies en tenant compte de la vitesse nominale Vn et des caractéristiques et paramètres des bouteilles (1) à véhiculer.

La vitesse de la première bande (15.1) peut être de l'ordre de la vitesse nominale Vn alors que la vitesse de la bande (15ap) précédente est de 1,2Vn comme indiqué précédemment. La vitesse de la deuxième bande (15.2) est de l'ordre de 1,2Vn et ainsi de suite. Les bandes (15.1, 15.3, 15.5) impaires ont une vitesse qui est inférieure à celle des bandes (15.2, 15.4, 15.6) paires.

Toutefois, en fonction des différents paramètres évoqués précédemment et notamment de la stabilité des bouteilles (1), la vitesse de la troisième bande (15.3) peut être légèrement supérieure, de 1,1Vn, par exemple, et celle de la quatrième bande (15.4) de l'ordre de 1,3Vn. Cette vitesse légèrement supérieure peut également s'appliquer sur les bandes suivantes.

Les bandes (15.1 à 15.6) sont entraînées à l'une de leurs extrémités par un même arbre (17) moteur qui comporte, de façon classique, des roues, non apparentes, de diamètres différents. -

Les figures 3 à 8 montrent l'évolution de la forme d'un train de bouteilles entre le début et la fin de la table (13s) secondaire d'alignement.

Le train de bouteilles (3) à (7) représenté figure 3, comporte une bouteille (5) non intégrée qui se situe, au début de la table (13s), en deuxième file.

Le passage du train de bouteilles sur la bande (15.1), figure 4, a pour effet de resserrer le train de bouteilles (3) à (7) tout en les faisant progresser contre le guide (16), lequel guide génère une force résultante qui favorise l'intégration.

Ensuite, le passage du train de bouteilles sur la bande (15.2), dont la vitesse est supérieure à celle de la bande (15.1), provoque un éclatement de la file, figure 5 ; les bouteilles s'écartent les unes par rapport aux autres et la bouteille (5) s'insère dans l'espace qui se forme entre les bouteilles (4) et (6).

Comme le montrent les figures 5 et 6, l'espace entre les bouteilles (4) et (6) est insuffisant pour permettre une intégration totale de la bouteille (5) entre les deux; cependant, cette intégration est suffisante pour permettre à ladite bouteille (5) de se maintenir par effet de coin entre lesdites bouteilles (4) et (6) et elles progressent ensemble sur la bande (15.3);

Cette bande (15.3), dont la vitesse est plus faible que celle de la bande (15.2) précédente, génère une nouvelle phase de resserrement du train de bouteilles (3 à 7), mais ce resserrement est inopérant sur le groupe de bouteilles (4 à 6) car ces trois bouteilles sont déjà en contact et c'est la bouteille (5) qui maintient l'écart entre les deux autres grâce à l'effet de coin précité.

Le fait d'avoir un train de bouteilles avec un nombre limité de bouteilles, de l'ordre de 5 à 12 selon le diamètre, permet de réduire les pressions des bouteilles les unes sur les autres à l'intérieur dudit train; cette particularité rend l'effet de coin plus efficace. Plus le diamètre des bouteilles est faible, plus l'effet de coin est efficace.

La bande (15.4) provoque ensuite une nouvelle phase d'étirement de la file et d'écartement des bouteilles du train les unes par rapport aux autres et en particulier des bouteilles (4) et (6), comme montré figure 7 ; cette fois-ci, la bouteille (5) peut s'insérer entre les bouteilles (4) et (6) au fur et à mesure de la progression du train de bouteilles, comme montré figure 8.

C'est cet enchaînement d'opération de resserrement et d'écartement des bouteilles qui permet une réussite totale de leur alignement avant d'atteindre le convoyeur (14) de transfert. Si la bouteille (5) qui était en double file au départ n'avait pas trouvé sa place au niveau de la bande (15.4), elle pouvait encore la trouver après, au niveau de la bande (15.6).

Le procédé et l'installation d'alignement sont adaptés à tous les types de bouteilles, par exemple aux bouteilles en verre ou en matériau thermoplastique

## Revendications

1. Procédé de mise en ligne, à la queue leu leu, de bouteilles (1) qui arrivent en flux, par le biais d'une table (12) de dosage, sur une table (13) d'alignement du type multi bandes, ledit procédé consistant :
- à guider lesdites bouteilles (1) en biais sur ladite table (13) d'alignement entre son entrée et sa sortie et, simultanément,
- à augmenter graduellement la vitesse desdites bouteilles (1) sur une partie de ladite table d'alignement, à partir de ladite entrée pour atteindre une vitesse qui est supérieure à la vitesse nominale Vn, ladite vitesse nominale correspondant à la cadence C des unités de production amont et aval multipliée par le diamètre D desdites bouteilles (1),
**caractérisé en ce qu'**il consiste à soumettre lesdites bouteilles (1) à au moins deux opérations alternées de resserrement et d'écartement, sur la partie aval de ladite table (13) d'alignement, avant leur évacuation, sous la forme d'une file constituée, par un convoyeur (14) de transfert.

2. Procédé selon la revendication 1, **caractérisé en ce qu'**il consiste à effectuer l'opération de resserrement à une vitesse qui se situe dans une plage allant de Vn à 1,1 Vn.

3. Procédé selon l'une quelconque des revendications 1 ou 2, **caractérisé en ce qu'**il consiste à effectuer l'opération d'écartement à une vitesse qui se situe dans une plage allant de 1,2Vn à 1,3Vn.

4. Installation pour la mise en ligne, à la queue leu leu, de bouteilles (1) qui arrivent en flux, comprenant, notamment :
- une table (12) de dosage qui amène un flux de bouteilles (1) à une vitesse appropriée,
- un convoyeur (14) de transfert qui évacue la file de bouteilles, lorsqu'elle est constituée, à une vitesse qui est supérieure à la vitesse nominale Vn et, entre les deux,
- une table (13) d'alignement multi bandes laquelle table (13) d'alignement est surmontée d'un guide (16) disposé en biais entre ses deux extrémités et comprend un premier groupe de bandes (15ap) qui accueille et aligne, autant que faire se peut, les bouteilles (1) provenant de ladite table (12) de dosage, lequel premier groupe de bandes (15ap) est animé de vitesses allant crescendo en partant d'une vitesse sensiblement supérieure à la vitesse de livraison desdites bouteilles (1) par ladite table (12) de dosage, pour atteindre graduellement une vitesse qui est supérieure à la vitesse nominale Vn, ladite vitesse nominale correspondant à la cadence C des unités de production amont et aval, multipliée par le diamètre D desdites bouteilles (1),
**caractérisée en ce que** la table (13) d'alignement comprend un second groupe de bandes (15 as) disposé entre ledit premier groupe de bandes (15ap) et ledit convoyeur (14) de transfert, constitué d'au moins deux couples de bandes (15.1, 15.2 et 15.3, 15.4....) qui sont animées, à l'intérieur de chaque couple, de vitesses différentes pour effectuer, en alternance et d'un couple à l'autre, les opérations de resserrement et d'écartement des bouteilles (1) qui circulent sur lesdites bandes (15as).

5. Installation selon la revendication 4, **caractérisée en ce que** la vitesse des bandes (15.1, 15.3, 15.5) impaires impliquées dans l'opération de resserrement des bouteilles (1) se situe dans une plage allant de Vn à 1,1 Vn.

6. Installation selon l'une quelconque des revendications 4 ou 5, **caractérisée en ce que** la vitesse des bandes (15.2, 15.4, 15.6) paires impliquées dans l'opération d'écartement des bouteilles se situe dans une plage allant de 1,2Vn à 1,3Vn.

## Claims

1. A method for aligning, one behind the other, bottles (1) arriving in a flow, via a dosing table (12), on an alignment table (13) of the multi-band type, said method consisting of:
- guiding said bottles (1) in an angled direction on said alignment table (13) between its inlet and its outlet and, simultaneously,
- gradually accelerating the speed of said bottles (1) over part of said alignment table, from said inlet, to reach a speed higher than the nominal speed Vn, said nominal speed corresponding to the output rate C of the upstream and downstream production units multiplied with the diameter D of said bottles,
**characterized in that** it consists of subjecting said bottles (1) to at least two alternating closing-up and spacing operations, on the downstream part of said alignment table (13), before their discharge, in the form of a formed queue, by a transfer conveyor (14).

2. The method according to claim 1, **characterized in that** it consists of carrying out the closing-up operation at a speed which is situated within a range from Vn to 1.1 Vn.

3. The method according to any one of claims 1 or 2, **characterized in that** it consists of carrying out the spacing operation at a speed that is situated within a range from 1.2 Vn to 1.3 Vn.

4. Installation for aligning, one behind the other, bottles (1) arriving in a flow, comprising, in particular:
- a dosing table (12) that conveys a flow of bottles (1) at an appropriate speed,
- a transfer conveyor (14) that discharges the queue of bottles, when it is formed, at a speed that is higher than the nominal speed Vn and, between the two,
- a multi-band alignment table (13), which alignment table (13) is surmounted by a guide (16) arranged in an angled direction between its two ends, and comprises a first group of bands (15ap) that receives and aligns, so far as possible, the bottles (1) coming from said dosing table (12), which first group of bands (15ap) is operated at increasing speeds starting from a speed substantially higher than the speed of delivery of said bottles (1), by said dosing table (12), to gradually reach a speed higher than the nominal speed Vn, said nominal speed corresponding to the output rate C of the upstream and downstream production units multiplied with the diameter D of said bottles (1),
**characterized in that** the alignment table (13) comprises a second group of bands (15as), arranged between said first group of bands (15ap) and said transfer conveyor (14), formed by at least two pairs of bands (15.1, 15.2 and 15.3, 15.4, etc.) that are operated at different speeds within each pair, in order to carry out, in alternating manner and from one pair to the other, the operations of closing-up and spacing the bottles (1) running on said bands (15as).

5. Installation according to claim 4, **characterized in that** the speed of the odd bands (15.1, 15.3, 15.5) involved in the closing-up operation of the bottles (1) is situated within a range from Vn to 1.1 Vn.

6. Installation according to any one of claims 4 or 5, **characterized in that** the speed of the even bands (15.2, 15.4, 15.6) involved in the spacing operation of the bottles is situated within a range from 1.2 Vn to 1.3 Vn.

## Patentansprüche

1. Verfahren zum hintereinander Ausrichten von Flaschen (1), die als Strom ankommen, in einer Reihe mit Hilfe eines Zuteilungstischs (12) auf einem Mehrband-Ausrichtungstisch (13), das Verfahren umfassend:
- schräges Führen der Flaschen (1) auf dem Ausrichtungstisch (13) zwischen seinem Eingang und seinem Ausgang, und gleichzeitig
- graduelles am Eingang beginnendes Erhöhen der Geschwindigkeit der Flaschen (1) auf einem Abschnitt des Ausrichtungstischs, um eine Geschwindigkeit zu erreichen, die höher als die Nominalgeschwindigkeit Vn ist, wobei die Nominalgeschwindigkeit dem Arbeitstakt C der stromaufwärtigen und stromabwärtigen Produktionseinheiten multipliziert mit dem Durchmesser D der Flaschen (1) entspricht,
**dadurch gekennzeichnet, dass** es die Flaschen (1) in dem stromabwärtigen Abschnitt des Ausrichtungstischs (13) in mindestens zwei sich abwechselnden Arbeitsschritten, des Zusammendrängens und des Trennens, unterzieht, und zwar vor ihrer Abgabe durch eine weitergebende Fördereinrichtung (14) als ausgebildete Reihe.

2. Verfahren nach Anspruch 1, **dadurch gekennzeichnet, dass** es ausgebildet ist, den Arbeitsschritt des Zusammendrängens mit einer Geschwindigkeit auszuführen, die sich in einem Bereich von Vn bis 1,1Vn befindet.

3. Verfahren nach Anspruch 1 oder 2, **dadurch gekennzeichnet, dass** es ausgebildet ist, den Arbeitsschritt des Trennens mit einer Geschwindigkeit auszuführen, die sich in einem Bereich von 1,2Vn bis 1,3Vn befindet.

4. Vorrichtung zum hintereinander Aufreihen von Flaschen (1), die als Strom ankommen, die insbesondere aufweist:
- einen Zuteilungstisch (12), der einen Strom von Flaschen (1) mit einer geeigneten Geschwindigkeit zuführt,
- eine weitergebende Fördereinrichtung (14), die die Flaschenreihe abgibt, wenn sie ausgebildet ist, mit einer Geschwindigkeit, die höher ist als eine Nominalgeschwindigkeit Vn, und dazwischen,
- einen Mehrband-Ausrichtungstisch (13), über dem sich eine Führung (16) erhebt, die schräg zwischen seinen zwei Enden angeordnet ist, und der eine erste Gruppe Bänder (15ap) aufweist, die ausgehend von dem Zuteilungstisch (12) die Flaschen (1) empfangen und soweit wie möglich ausrichten, wobei die erste Gruppe Bänder (15ap) mit zunehmender Geschwindigkeit betrieben wird, und zwar ausgehend von einer Geschwindigkeit, die im Wesentlichen höher als die Zustellgeschwindigkeit der Flaschen (1) durch den Zuteilungstisch (12) ist, um schrittweise eine Geschwindigkeit aufzunehmen, die höher als die Nominalgeschwindigkeit Vn ist, wobei die Nominalgeschwindigkeit dem Arbeitstakt C der stromaufwärtigen und stromabwärtigen Produktionseinheiten multipliziert mit dem Durchmesser D der Flaschen (1) entspricht,
**dadurch gekennzeichnet, dass** der Ausrichtungstisch (13) eine zweite Gruppe Bänder (15as) aufweist, die zwischen der ersten Gruppe Bänder (15ap) und der weitergebenden Fördereinrichtung (14) angeordnet ist, die aus mindestens zwei Paar Bändern (15.1, 15.2 und 15.3, 15.4 ...) ausgebildet wird, die innerhalb jeden Paars, mit unterschiedlichen Geschwindigkeiten angetrieben werden, um abwechselnd und von einem Paar zum anderen die Arbeitsschritte des Zusammendrängens und Trennens der Flaschen (1), die auf den Bändern (15as) zirkulieren, auszuführen.

5. Vorrichtung nach Anspruch 4, **dadurch gekennzeichnet, dass** sich die Geschwindigkeit ungeradzahliger Bänder (15.1, 15.3, 15.5), die in den Arbeitsschritt des Zusammendrängens von Flaschen (1) einbezogen sind, in einem Bereich zwischen Vn bis 1,1Vn befindet.

6. Vorrichtung nach Anspruch 4 oder 5, **dadurch gekennzeichnet, dass** sich die Geschwindigkeit geradzahliger Bänder (15.2, 15.4, 15.6), die in den Arbeitsschritt des Trennens von Flaschen (1) einbezogen sind, in einem Bereich zwischen 1,2 Vn bis 1,3 Vn befindet.
